# EUROPEAN PATENT SPECIFICATION

(11) **EP 3 040 490 B1**
(45) Date of publication and mention of the grant of the patent: **20.09.2017**
(21) Application number: 15203022.7
(22) Date of filing: 29.12.2015
(51) Int. Cl.: E04B 1/64, E04B 1/70

(54) **METHOD AND SYSTEM FOR ACTIVATING AND CONTROLLING A WATER-REPELLING PROCESS IN WALLS**
VERFAHREN UND SYSTEM ZUR AKTIVIERUNG UND KONTROLLIEREN EINES WASSERABWEISENDEN PROZESS FÜR WÄNDE
PROCÉDÉ ET SYSTÈME D'ACTIVATION ET CONTRÔLE D'UN PROCESSUS POUR HYDROFUGER DES MURS

(30) Priority: 30.12.2014 IT MI20142279
(43) Date of publication of application: 06.07.2016
(73) Proprietor: UNIVERSITA' DEGLI STUDI DI CAGLIARI, 09124 Cagliari (IT)
(72) Inventor: RANIERI, Gaetano, 09125 Cagliari (IT); TROGU, Antonio, 09125 Cagliari (IT); NOLI, Luigi Michele, 09042 Monserrato (CA) (IT); SITZIA, Avelino Mario, 09125 Cagliari (IT); CALCINA, Sergio Vincenzo, 09041 Dolianova (CA) (IT); PIRODDI, Luca, 09047 Selargius (CA) (IT); LODDO, Francesco, 09041 Dolianova (CA) (IT)
(74) Representative: Baroni, Matteo

(56) References cited:
- EP-A1- 2 514 733
- GB-A- 2 042 605
- US-A- 5 183 694
- BINDA L ET AL: "NDE of masonry structures: use of radar tests for the characterisation of stone masonries", NDT & E INTERNATIONAL, BUTTERWORTH-HEINEMANN, OXFORD, GB, vol. 31, no. 6, 1 December 1998 (1998-12-01), pages 411-419, XP004292601, ISSN: 0963-8695, DOI: 10.1016/S0963-8695(98)00039-5
- JORNE FERNANDO ET AL: "Evaluation of consolidation of grout injection with ultrasonic tomography", CONSTRUCTION AND BUILDING MATERIALS, ELSEVIER, NETHERLANDS, vol. 66, 22 June 2014 (2014-06-22), pages 494-506, XP029039608, ISSN: 0950-0618, DOI: 10.1016/J.CONBUILDMAT.2014.05.095
- NASSER ABU ZEID ET AL: "Indirect estimation of injected mortar volume in historical walls using the electrical resistivity tomography", JOURNAL OF CULTURAL HERITAGE, vol. 11, no. 2, 1 April 2010 (2010-04-01), pages 220-227, XP055210926, ISSN: 1296-2074, DOI: 10.1016/j.culher.2009.07.001

## Description

### Field of the invention

The present invention relates to a method and a system for activating and controlling a water-repelling process in wall structures. It is therefore of interest in the building industry, particularly in the field of building reclamation.

### Background art

Water-repelling refers to removing water absorbed in walls, whether permanently or provisionally.

Normally it concerns external plaster and/or the protection layer of external paints. The water-repelling process is never "followed", whether with destructive or non-destructive methods. Besides, the process is often arbitrarily interrupted solely on the basis of "visual" parameters.

Many ancient buildings were built with local stone or masonry made out of ashlars of materials easily subject to erosion, especially under the action of water. This is the typical case of buildings that were erected in centres of towns close to the sea or anyway where the moisture content in the air can reach very high values. The materials that were used are often soft, because they had to be easily workable, and are generally highly hygroscopic. The effect that this produces is continuous disgregation due to the presence of humidity. Moreover, these materials do not easily bind to plaster and paint and absorb humidity, so that houses are often unhealthy and wall decorations get quickly degraded.

Aiming at obtaining a water-repelling effect, a method is known wherein epoxy or polyurethane-based emulsions are introduced into the masonry. However, this operation is carried out without checking the ways that the emulsions will occupy and without verifying its effectiveness over time. In fact, water movement and emulsion consolidation are not controlled, and in many cases uncontrolled operations have made the situation even worse instead of providing reclamation, both because of the washing and abrasive effects of water, which may undergo violent movement in the pores, and because of the increased volume caused by crystallization, resulting in material disgregation.

Methods are known from patents relating to different aspects of water-repellence, which make use of protective paints, bactericidal agents, colour maintenance, soundproofing, and physical systems for protecting external walls.

Patent EP-0688383 describes a method called Aquapol, which uses an electromagnetic system with a spiral coil that allows penetrating the walls by a few centimeters, thus appearing to be suitable for subjecting to a water-repelling treatment only the wall plaster, not the inside of the walls.

Patent CN-101219867 describes a method called Concrete Maintaining Agent, which concerns concrete, not stone masonry. In all cases, neither the effectiveness of the water-repelling process nor the dehumidification results are checked.

Both of the above-mentioned methods are oriented towards "protection" against external attack from water and humidity. They envisage the application of external films onto the masonry, without taking into account that most walls, whether made out of stone or stone ashlars, have humidity in their inner part and are strongly hygroscopic, i.e. they acquire humidity in contact with plaster, resulting in chipping and detachment of the plaster, including any protection layer.

Other methods, as described, for example, in EP 1 956 147 A1, are oriented towards ground consolidation by introduction of emulsions, not towards water repellence. EP 2 514 733 A1 describes a method for having a dehumidifying material penetrate into a wall structure by electrophoresis, with the features of the preamble of claims 1 and 6. The injection parameters (position, mesh size, electrode power voltage, etc.) are determined and the effectiveness of the method is checked by using a system called "palpeur Dupas", which determines the dielectric constant of the material and a frequency declared to be proportional to the water content. With such a system, according to the description, a "penetration profile" is preliminarily defined, and then the water content variation occurred after the injection is evaluated. This description poses the problem of how to determine the actual depth of the data measured before and after the injections. This leads to the problem of how to determine the modulation of the parameters described in the patent. The method does not solve the problem of water outflow from the masonry, which can then occupy new portions of the wall. The displaced water is not drained out, and no verification is made in this respect. Therefore, the dehumidifying system does not appear to be a permanent one.

GB 042 605 A describes a method for limiting the leakage of dehumidifying liquid during injection into a wall structure through a modular system of collectors, taps, plastic T-shaped elements, and rings, flanges or tabs for adaptation to the hole size. Injection occurs at a non-specified injection pressure through a non-specified injection tool. This patent does not solve the problems of how to locate the wall areas to be treated, how to determine the depth of the injection holes, and how to adjust the pressure.

In conclusion, the known process of introducing emulsions into masonry is carried out without controlling the ways that will be occupied by the emulsions, and without checking the effectiveness and stability of the intervention over time. As a matter of fact, water movement and emulsion consolidation are not monitored, and in many cases uncontrolled operations have made the situation even worse because of the effects of increased volume caused by crystallization, resulting in disgregation of the matrix material.

Humidity is often due to the fact that some types of materials capture the condensed humidity in the air subject to cooling or water descending from roofs and lofts, or due to anthropic causes.

In the building industry, both for reclaiming and restoring old houses and for protecting works of art or monuments, the restoration of walls subject to capillary rise of humidity must be carried out by using non-destructive methods, and is conditional upon a perfect knowledge of the masonry involved. Otherwise, the introduction of reclamation elements at high pressure, such as epoxy or polyurethane-based or acrylic co-polymeric resins, may often cause damage instead of preventing it.

### Summary of the invention

It is the purpose of the present invention to provide a method and a system for activating and controlling a water-repelling process in wall structures, which can overcome the above-mentioned problems.

According to a main aspect of the present invention, it has been observed that it is very important to "follow" the progress of the process of introducing dehumidifying and waterproofing substances, hereafter referred to as "emulsions" (e.g. based on co-polymers of acrylic styrene or the like).

Monitoring the injection process allows verifying the actual progress of the emulsions, so that it is possible, by appropriately changing the electrical and mechanical injection parameters, to re-define as necessary new volumes that need to be reached.

The method of the invention is therefore characterized by the features of the characterising portion of claim 1. The microgeophysical techniques used for creating the images are, for example, the following: Electrical Resistivity Tomography (ERT), Self Potential (S.P.), GPR (Ground Probing Radar), Seismic (or Sonic or Ultrasonic) Tomography, Thermal Tomography, Multispectral Survey.

The present invention relates to a method for activating and controlling a water-repelling process in a wall structure, with the features of claim 1. Preferably, said introduction of emulsions comprises:
- electro-osmotic draining of the water or humidity that is present in the canaliculi of said wall structure, by means of perforated metal tubes electrically connected as a negative electrode; similar metal tubes being placed in the wall structure, acting as an anode for electro-osmosis activation;
- directional penetration of the emulsion into the canaliculi identified in the wall structure, by applying a stationary electric field between one or more small metallic tubes, into which the emulsion is introduced, connected to the positive pole, and second small metallic draining tubes, connected to the negative pole.

Preferably, said introduction of emulsions comprises:
- **forced** introduction, via a **combined** action of a pulsed overpressure of 50 to 150 bar with a pause, said overpressure being a function of the type of material to be water-repelled, and an electric action exerted by electrophoresis through application of electric fields;
- said emulsions performing a dual function of:
   a) moving and replacing the water present in the canaliculi;
   b) making the canaliculi waterproof by crystallization of the emulsion, which will also encapsulate the residual water.

The present invention also relates to a system for activating and controlling a water-repelling process in a wall structure, adapted to implement the method, with the features of claim 6. The physical properties represented in the images are: electric resistivity, amplitude of the reflected radar signal, electric potential, temperature, velocity of the elastic waves, reflectance.

It is a particular object of the present invention to provide a method and system for activating and controlling a water-repelling process in wall structures as set out in the appended claims, which are an integral part of the present description.

### Brief description of the drawings

Further objects and advantages of the present invention will become apparent from the following detailed description of a preferred embodiment (and variants) thereof referring to the annexed drawings, which are only supplied by way of non-limiting example, wherein:
- Figures 1-4 show images that describe the different steps carried out after the execution of a water-repelling process in a wall structure, by means of resistivity readings taken by using the 2D Electrical Tomography technique;
- Figures 5-7 show images that describe the different steps carried out after the execution of a water-repelling process in a wall structure, by means of the IR thermography diagnostic technique;
- Figures 8-9 show images that describe the different steps carried out after the execution of a water-repelling process in a wall structure, by means of the GPR (Ground Probing Radar) diagnostic technique;
- Figure 10 shows an image that describes the step carried out after the execution of the water-repelling process in a wall structure, by means of the Self Potential measurement diagnostic technique;
- Figure 11 shows a diagram that describes the electrode distribution used for the execution of 3D and 4D electrical resistivity tomographies (delayed over time);
- Figure 12 shows a detail of the electric contact of the diagram of Figure 11;
- Figure 13 shows an image concerning the arrangement of sensors for microseismic surveys on the stone surface of a manufactured product.

### Detailed description

The method of the invention envisages the introduction of a dehumidifying emulsion into unhealthy walls subject to the effects of humidity rising in the pores thereof, in the capillaries of the plaster that covers them, and in the mortar bed.

The method of the invention makes it possible to not only move the water towards a collection system external to the wall (according to Casagrande's law), but also to appropriately route the emulsion before it crystallizes. This can be done after a number of non-destructive (microgeophysical) blank tests carried out before the draining and injection intervention, and also in subsequent time lapses during the injection, for checking the path followed by the emulsion. This microgeophysical monitoring activity carried out at different times will allow verifying that crystallization has actually occurred, as well as testing the intervention under natural or artificial imbibition actions.

The method of the invention is preferably applied to masonry made out of stones or ashlars of porous material, and envisages the introduction of a dehumidifying emulsion through combined mechanical and electric actions, while allowing the effectiveness of the system for removal of inner and outer humidity to be checked almost in real time by using microgeophysical methods.

After the wall to be subjected to the water-repelling treatment has been analyzed (the so-called "blank test") with non-destructive systems based on *per se* known physical principles, water and humidity are drained, and then an emulsion is introduced into the wall at a pressure higher than atmospheric pressure, appropriately directed by means of a simultaneous electrophoretic action.

The water in the canaliculi of the wall structure is subtracted by electro-osmosis through the application of an electric field, wherein the interstitial water is directed towards the cathode consisting of an inclined perforated metal tube, thus performing a dual function as an electrode and as a draining system. Similar small tubes driven into the wall make up the positive pole and also the emulsion introduction system. The emulsion penetrates into the canaliculi in the desired direction, thanks to the application of a stationary electric field between the metal tube also acting as a positive electrode (or pole), through which it is introduced, and another small perforated metal tube acting as a drain tube, which is slightly inclined outwards and also works as a negative electrode (or pole).

The residual water still present in the canaliculi after the preliminary drainage procedure is displaced by the emulsion and subtracted, also by electro-osmosis, from the negative electrode.

The positive electrode thus coincides with the small perforated tube through which the fluidic emulsion is introduced, whereas the negative electrode consists of a further small perforated tube through which the displaced water is removed. The tube for emulsion introduction should be sealed in order to prevent the emulsion from leaking out sideways. In this way, the emulsion is allowed to crystallize, preventing any water or humidity from rising again in the wall structure.

At the same time, on the outside, i.e. on the accessible surface of the wall, microgeophysical methods *per se* known are applied for controlling the penetration of the emulsion, also for the purpose of correcting the directions of attraction of the volumes being reclaimed (e.g. like geophysical methods traditionally applied to ground surfaces). Wall characterization (blank test), emulsion progress, emulsion stabilization over time, and the improvement of the physical and mechanical characteristics can be monitored, for example, by using the following methods: 2D, 3D and 4D Electrical Resistivity Tomography, Georadar, Self Potential, Sonic, Ultrasonic and Seismic Tomography, Thermal Infrared Tomography, Multispectral and Hyperspectral Images. (black test).

A comparison with the blank tests will better highlight the variation in the measured physical properties, dependent on the water-repelling action exerted.

The water-repelling action will occur by **concomitance** of combined mechanical and electrical actions.

The material introduced performs a dual function:
a) moving and replacing the water existing in the pores;
2) making the water microduct waterproof by crystallization of the emulsion that encapsulates any residual water.

The material introduced shall have adequate physical, mineralogical (viscosity, density, composition, crystallization temperature) and consistency for the intended functions. A material that is too fluid and has particles much smaller than the canaliculi might not crystallize; conversely, a very dense material with particles having a diameter much bigger than the section of the canaliculi might prevent motion within the canaliculi.

Of course, during the introduction stage it will be very important to monitor the inlet pressure and temperature.

Normally, even when due attention is paid, the path followed by the emulsion within the volume under treatment is not known. It is therefore very important to monitor the execution of the emulsion introduction process not only at the initial stage, but also during the intermediate stage of "occupation" of the entire volume under treatment, based on which one can then stop the introduction process. It is important to know when the water-repelling process can be considered to be complete, i.e. to know when crystallization and full consolidation of the emulsion has occurred.

This can be achieved by generating images representing the physical properties of the materials, through application of appropriate non-destructive methods, such as geophysical ones.

The geophysical methods normally applicable to ground surfaces that can also be adapted for use on wall surfaces are the following:
- **2D, 3D and 4D Electrical Tomography,** using metallic or electromedical potential electrodes placed in contact with the outer surface of the wall;
- the **Georadar** method, with high-frequency (>1.5GHz) monostatic antenna (for walls accessible on one side only) or bistatic antenna (for walls accessible on both sides), and the associated amplitude and frequency processing methods.
- **Sonic, Ultrasonic and Seismic Tomography** using piezoelectric seismometers and acoustic or impulsive energizer;

- the **Self Potential** method;
- **Thermal Infrared** Thermography with SVD (Single Value Decomposition) and NTG (Night Thermal Gradient) analyses;
- **Multispectral** and Hyperspectral images repeated over time.

For each of these methods, sensor miniaturization is provided.

Verifications can be carried out through checks made by using one or more or all of the above-listed microgeophysical methods.

The method of the invention essentially includes four steps:
1) verifying the material to be subjected to the water-repelling treatment by using *per se* known geophysical methods, which are however applied through the use of particular instrumental and data treatment measures for adaptation to measurements on wall structures, e.g.: Electrical Resistivity Tomography (ERT), Self Potential (S.P.), GPR (Ground Probing Radar), Seismic (or Sonic or Ultrasonic) Tomography, Thermal Tomography, Multispectral Survey;
2) draining the detected water or humidity by electro-osmosis;
3) introducing an emulsion into the wall via integrated use of mechanical and electrical systems;
4) monitoring the progress of the emulsions over time by using the methods employed in step 1);
5) checking the effectiveness of the treatment by using microgeophysical methods as in step 1.

As aforementioned, the method of the invention has three fundamental aspects:
- application of microgeophysical techniques in order to come to **know** the inner parts of walls, also valuable ones, for the purpose of defining the best reclamation strategy;
- **drainage** of interstitial water and humidity by electro-osmosis and introduction of "emulsions" via a simultaneous action exerted by pulsed mechanical overpressure and electricity, and **controlling** the wall penetration geometry by means of integrated geophysical methods and the related data treatment steps described below;
- **localization** and **monitoring** over time of the effectiveness of the treatment (emulsion consolidation, displacement of interstitial water, drainage of displaced water) by using microgeophysical techniques, e.g. ERT, GPR, SP, sonic, ultrasonic and seismic tomography, thermographic and multispectral acquisitions with the application and data treatment measures described below.
   1) Control by means of 2D (electrodes arranged along straight lines), 3D (electrodes arranged along more or less regular polygons) and 4D (electrodes arranged as in 2D and 3D tomography, but measurements are repeated over time) electrical resistivity, using stainless steel electrodes (bolts) or electrocardiogram electrodes as current and potential electrodes. The electrodes are supported by an electrically insulated rigid bar and pressed against the wall surface. Resistivity is measured by means of a georesistivimeter with high internal impedance. Inversion is performed by using standard methods.
   2) Thermal control
      Pre-heating or pre-cooling by +/- 3 °C (relative to ambient temperature) of the "emulsion" to be injected, and thermographic monitoring of the free surface of the wall or of both surfaces, when accessible. Possible application of SVD (Singular Value Decomposition) or NTG (Night Thermal Gradient) techniques to the thermographic time sets, for distinguishing those contributions to the surface temperature dynamics which are due to environmental factors (solar irradiation, wall cooling, etc.) from contributions due to the motion of the emulsions that have a thermal gradient relative to ambient temperature.
   3) Control by means of georadar techniques
      This control is effected by means of a high-frequency antenna (>1.5 GHz), both in monostatic mode and in bistatic mode, on the same side or on both faces of the wall, when accessible, and can detect and discern the presence of pre-existent humidity and water and then the presence of liquid or mature "emulsion" via the spectral content of the recorded electromagnetic signal or the variation of the amplitude parameters in the time and frequency domains.
   4) Further checks
      (a) Further checks may be carried out by means of 3D and 4D electrical tomographic techniques, through the use of grids of non-polarizable electrodes for measuring the surface self potentials in time-lapse mode and the related tomographic inversion, (b) microseismic, sonic and ultrasonic techniques for velocity tomography and other characteristic parameters, monitoring by means of multispectral chambers for detecting variations in the spectral emissivity and reflectance of the free surface of the wall after injection and consolidation of the emulsions.

Therefore, as aforementioned, the method of the invention has the following fundamental aspects:
- creating two-dimensional and three-dimensional images of the inner parts of the masonry before the injections, by applying microgeophysical techniques, in order to define the portion of wall concerned by the presence of water or humidity that needs to be reclaimed, and hence the position and depth of the injection holes;
- using a system for causing water and humidity to flow from the inner parts to the outer parts of the masonry;
- introducing dehumidifying substances, hereafter referred to as "emulsions", through a simultaneous action exerted by pulsed mechanical overpressure and electrophoresis;
- creating two-dimensional and three-dimensional images of the inner parts of the masonry while introducing emulsions, by applying microgeophysical techniques, in order to monitor almost in real time the penetration of the emulsions into the masonry;
- creating two-dimensional and three-dimensional images of the inner parts of the masonry after the injections, by applying microgeophysical techniques, in order to verify the effectiveness of the treatment.

Preferably, the control electric measurements will be taken during pauses in the electro-osmosis and electrophoresis processes, possibly coinciding with a pause in the application of mechanical overpressure.

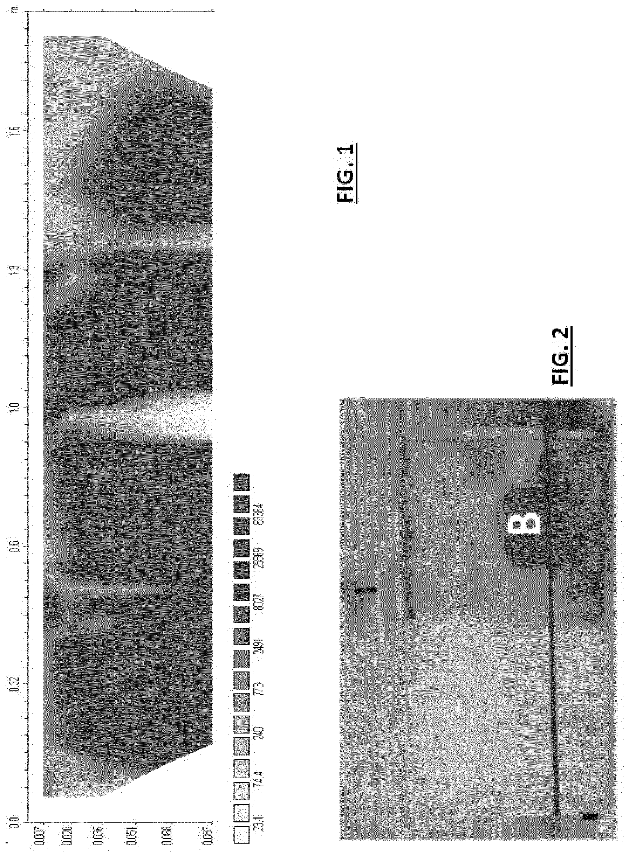

The images of Figures 1-4 show the different steps carried out after the execution of a water-repelling process in a wall structure by means of resistivity readings taken by using the 2D Electrical Tomography technique; In particular:
Figure 1 shows the blank 2D electrical tomography, i.e. carried out on the wall prior to the treatment. This section represents the distribution of the resistivity values along a horizontal section of the wall at the height where the following will be successively injected: water first, in order to imbibe an ashlar and simulate the humid wall part, followed by "water-repelling emulsion". It is possible to distinctly discern the cement mortar joints that delimit the individual ashlars.

Figure 2 shows the wall, made out of regular sandstone ashlars, with mortar joints and coated with different plasters: cement plaster (on the right) and lime (on the left). Into the ashlar designated as B, water was first introduced (in the rear central part) until ashlar saturation, followed by "emulsion". The horizontal line indicates the position of the electrode array for both the blank test and the tests carried out in the different steps for controlling the water-repelling process. Two metal electrodes were placed along the same line, respectively connected to the positive pole and negative pole of a battery, for electro-osmotic drainage and electrophoretic system activation.

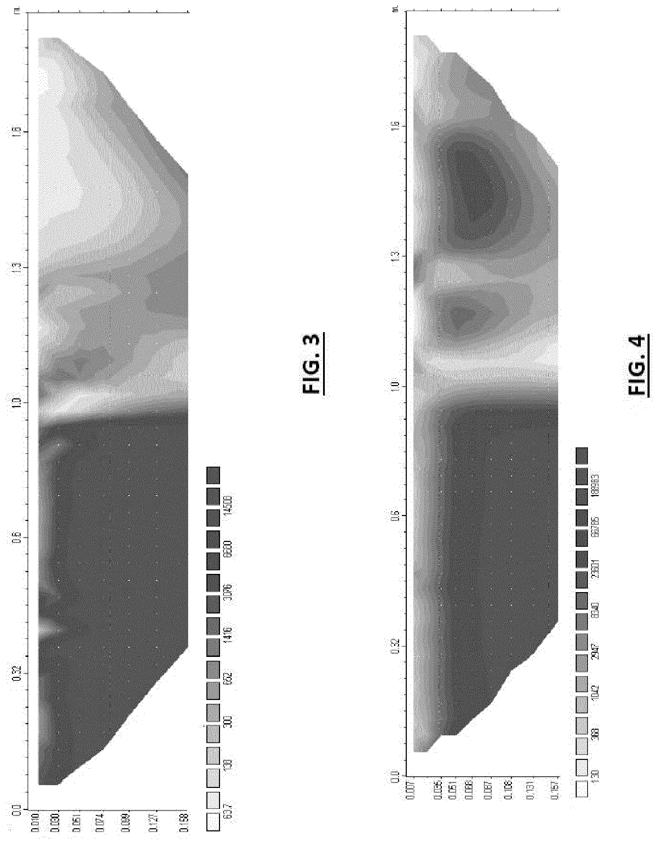

Figure 3 shows the electrical tomography of the same section described above, carried out two hours after an ashlar had been saturated with water. As can be seen, the distribution of the resistivity values shows the lowest values in the previously dampened area.

Finally, Figure 4 shows the electric tomography relating to an acquisition made two weeks after the introduction of "water-repelling emulsion" into the ashlar. The image clearly highlights the formation of a resistive core in the right-hand portion, in the domain treated by injection of water-repelling "emulsion".

Further experiments were then carried out on the same manufactured part by using different diagnostic techniques, such as IR thermography, the GPR (Ground Probing Radar) method, and Self Potential measurement.

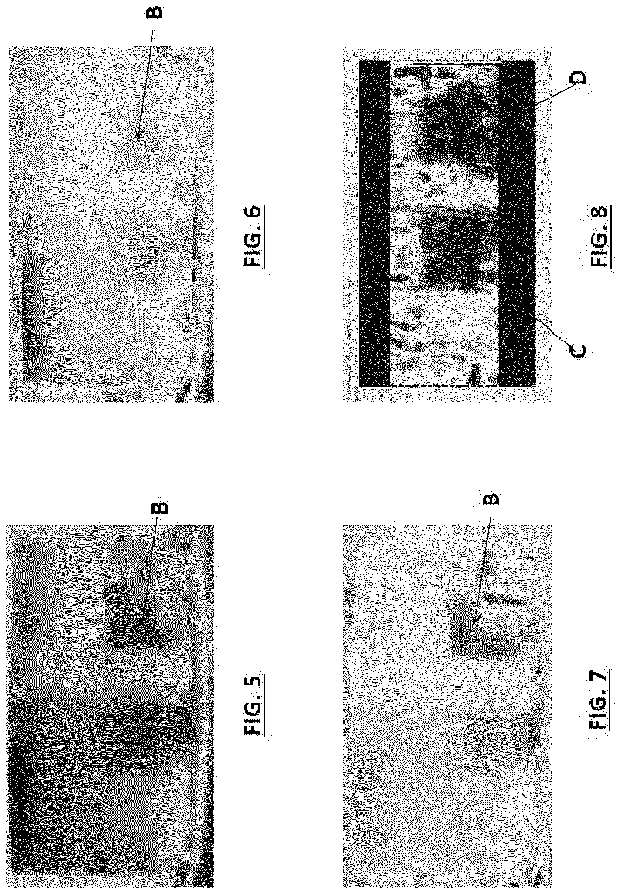

Figure 5 shows a thermogram of the wall (free vertical prospect) after saturation of the ashlar B with "emulsion" at + 3°C relative to ambient temperature. The image highlights the presence of a cold spot due to the previous introduction of cold water.

Figure 6 shows the thermogram of the wall immediately after the introduction into the ashlar B of "emulsion" at + 3°C relative to ambient temperature. As can be seen, the "cold" anomaly of the ashlar is smaller than in the preceding figure.

Finally, Figure 7 shows the thermogram taken after the introduction of "emulsion". As can be observed, the "emulsion" has consolidated towards the negative electrode (vertical linear mark).

Some examples of experiments conducted by using the GPR technique are shown in Figure 8. The map represents a set of radargrams (each one acquired parallel to the vertical prospect, 17 cm away from the surface), two hours after the introduction of water into two saturated ashlars C, D. The experiment does not refer to the same ashlars as used in the preceding figures. With this technique, one can clearly locate the areas concerned by the presence of humidity, thanks to the intense signal amplitude absorption due to the presence of water in the saturated ashlars.

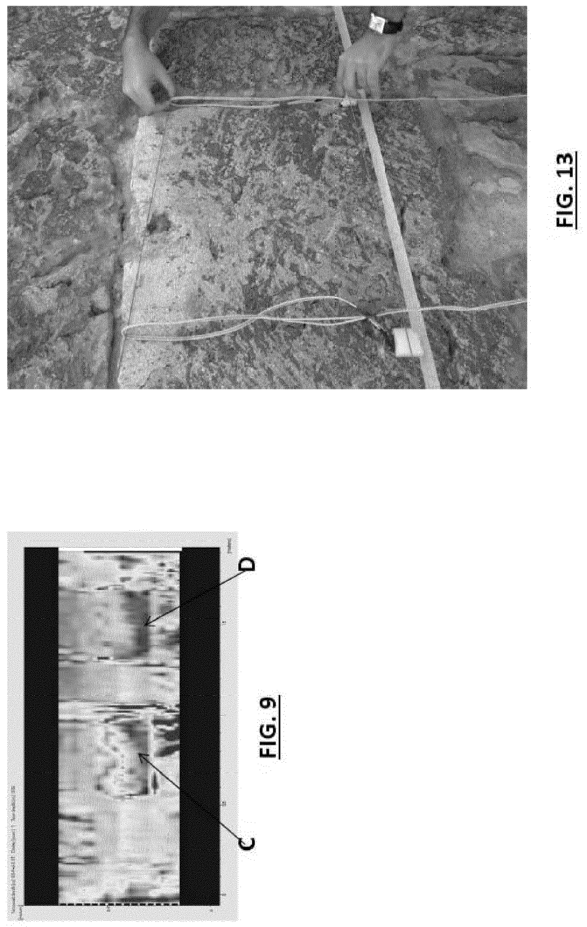

Figure 9 shows the same experiment, with the same acquisition geometries as used in Figure 8, repeated two hours after the introduction of "emulsion" into the two previously dampened ashlars C, D. The water-repelling effect in progress is highlighted by a lower attenuation of the radar signal, due to the very water-repelling effect.

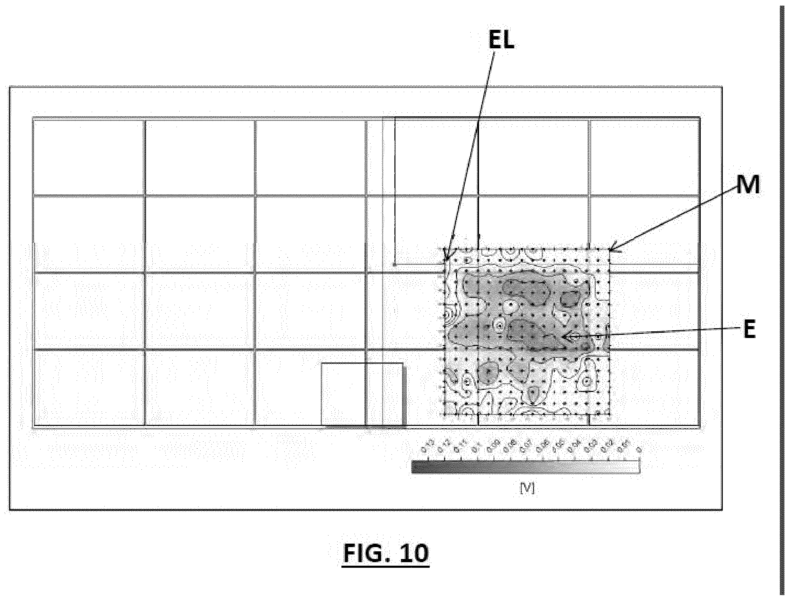

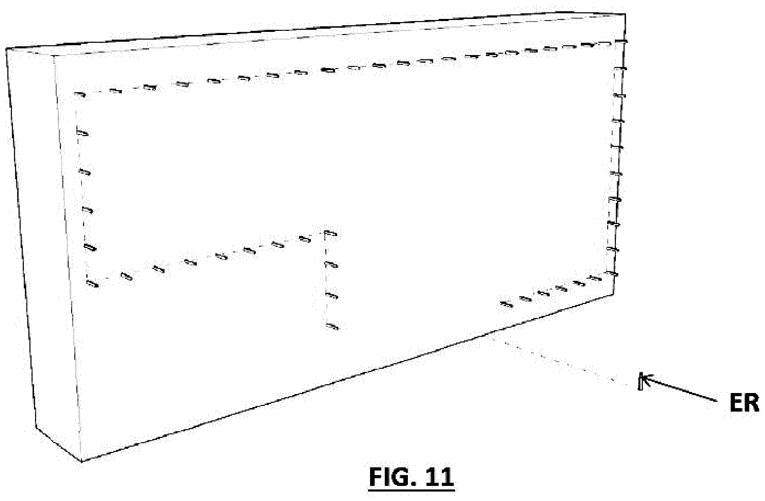

Figure 10 shows the map of Self Potentials measured in the ashlar E subjected to the injection operation. The potential difference was measured relative to a reference electrode EL, as indicated in the figure. The reading was taken by applying onto the wall a matrix M made up of 256 electrodes, kept integral with the wall surface. The map highlights the presence of an important self-potential anomaly in the ashlar E under treatment. Further examples of control of the water-repelling process by means of non-destructive diagnostic techniques and of the devices in use are shown in Figures 11-13.

Figure 11 shows a diagram that describes the electrode distribution used for the execution of 3D and 4D electrical resistivity tomographies (delayed over time). The electric contact between the individual elements and the wall surface is ensured by a rigid support kept under pressure. In particular, the diagram shows one possible measurement configuration, which uses a "remote electrode" ER (i.e. a Pole-Dipole electrode device).

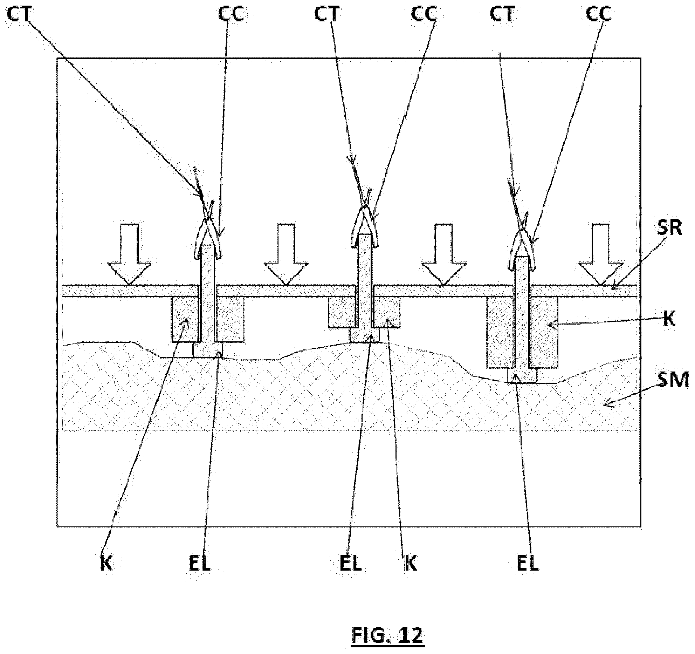

The electric contact of the diagram shown in Figure 11 is represented in detail in Figure 12. The system configured for ensuring a good coupling between the electrode and the wall surface consists of a rigid support SR that houses the electrodes EL. Each electrode is connected to the signal transmission cable CT via a suitable connection system (e.g. through the use of clamps or clips CC). With each electrode EL an extensible elastic element EE is associated, which is inserted between the terminal part of each electrode and the rigid support SR. Said element allows reducing the effect of the irregularities of the wall surface SM, thus ensuring contact. A similar system was used for measuring the self potentials on the wall face. More in particular, in Figure 12:
EL indicates electrodes distributed evenly and housed on a wooden rigid support SR kept under pressure (see arrows) to ensure a proper coupling with the wall surface;
K indicates an extensible elastic element inserted between the terminal part of each electrode EL and the rigid support SR to make up for the irregularities of the wall surface SM;
CC indicates a system for connecting the electrode EL to the cable CT used for signal transmission.

Finally, Figure 13 shows an image concerning the arrangement of sensors for microseismic surveys on the stone surface of a manufactured product. The devices used as transducers allow recording the signal produced by a small hammer (impulsive signal) or by a source of variable-frequency signals (sweep). The operator will arrange the receivers in accordance with predefined geometries, maintaining a good coupling between the sensors and the medium surface.

The above-described example of embodiment may be subject to variations without departing from the protection scope of the present invention, including all equivalent designs known to a man skilled in the art.

The elements and features shown in the various preferred embodiments may be combined together without however departing from the protection scope of the present invention. The advantages deriving from the application of the present invention are apparent.

A big advantage is attained as regards the restoration of old buildings in city centers close to the sea o lakes, or built on superficial water beds or anyway subject to capillary rise of meteoric water, climatic actions or pollutant attack. Particularly in Italy, and in general in all ancient towns, the present invention is very valuable because it allows optimizing restoration interventions, whether for common private and public buildings or for more valuable architectural heritage, thus improving the appearance and hence the urban decorum of towns and cities.

Its value is made even higher by the fact that eco-compatible systems and non-destructive control methods are employed.

The present invention can be used for civil buildings and for restoration of public artistic and monumental works.

From the above description, those skilled in the art will be able to produce the object of the invention without introducing any further construction details.

## Claims

1. Method for activating and controlling a water-repelling process in a wall structure, wherein it comprises the steps of:
- creating images of the inner parts of the wall structure by applying integrated microgeophysical techniques in order to characterize the inner parts of said wall structure as concerns the presence of water or humidity;
- introducing emulsions, to be used as dehumidifying substances, into said wall structure through electrophoresis;
- creating images of the inner parts of said wall structure by applying integrated microgeophysical techniques in order to monitor the path followed by the emulsions, the progress of the water-repelling process, and the effectiveness of the applied treatment over time, **characterised in that**
- the images created are two-dimensional and three-dimensional images; and **in that** the method further comprises the following steps:
- draining the water or humidity from said wall structure via electro-osmosis; and
- introducing the emulsions through a simultaneous action exerted by pulsed mechanical overpressure and electrophoresis.

2. Method according to claim 1, wherein said microgeophysical techniques are applied by using particular expedients in terms of instruments and data processing in order to adapt them for measurements on wall structures, and comprise one or more of the following methods: Electrical Resistivity Tomography (ERT), Self Potential (S.P.), GPR (Ground Probing Radar), Seismic (or Sonic or Ultrasonic) Tomography, Thermal Tomography, Multispectral Survey.

3. Method according to claim 1, wherein said introduction of emulsions comprises:
- electro-osmotic draining of the water or humidity that is present in the canaliculi of said wall structure, by means of perforated metal tubes electrically connected as a negative electrode; similar metal tubes being placed in the wall structure, acting as an anode for electro-osmosis activation;
- directional penetration of the emulsion into the canaliculi identified in the wall structure, by applying a stationary electric field between one or more small metallic tubes, into which the emulsion is introduced, connected to the positive pole, and second small metallic draining tubes, connected to the negative pole.

4. Method according to claim 1, wherein said emulsion introduction comprises:
- forced introduction, via a combined action of a pulsed overpressure of 50 to 150 bar with a pause, said overpressure being a function of the type of material to be water-repelled, and an electric action exerted by electrophoresis through application of electric fields;
- said emulsions performing a dual function of:
a) moving and replacing the water present in the canaliculi;
b) making the canaliculi waterproof by crystallization of the emulsion, which will also encapsulate the residual water.

5. Method according to any one of the preceding claims, wherein said introduction of emulsions is adapted to prevent future rise of water and humidity in said wall structure.

6. System for activating and controlling a water-repelling process in a wall structure, comprising means for implementing the method according to any one of the preceding claims, comprising:
- means for creating images of the inside of the wall structure by applying microgeophysical techniques, in order to characterize the presence of water or humidity therein;
- means for draining the water or humidity that is present in the wall structure by electro-osmosis, through installation of perforated metal tubes into said wall structure, electrically connected as a cathode;
- means for introducing emulsions, to be used as dehumidifying substances;
- means for creating images of the inner parts of the wall structure by applying integrated microgeophysical techniques, in order to monitor the path followed by the emulsions and the progress of the water-repelling process over time, **characterised in that** the system further comprises:
- means for creating two-dimensional and three-dimensional images of the inside of the wall structure;
- means for the introduction of the emulsions by simultaneous pulsed mechanical overpressure and electrophoresis; and
- similar perforated metal tubes being placed in the wall structure, acting as an anode for electro-osmosis activation.

7. System according to claim 6, wherein said means comprise:
- means for coupling the electrodes to the wall structure, comprising at least one rigid support (SR) adapted to house the electrodes (EL), each electrode being connected to a signal transmission cable (CT), an extensible elastic element (EE) being associated with each electrode, inserted between the terminal part of each electrode and the rigid support, said elastic element reducing the effect of irregularities of the wall surface, thus ensuring contact therewith.

8. System according to claim 6, wherein said microgeophysical techniques are applied by using instruments and data processing in order to adapt them for measurements on wall structures, and comprise means for implementing one or more of the following methods: Electrical Resistivity Tomography (ERT), Self Potential (S.P.), GPR (Ground Probing Radar), Seismic (or Sonic or Ultrasonic) Tomography, Thermal Tomography, Multispectral Survey.

## Patentansprüche

1. Verfahren zum Auslösen und Kontrollieren eines Wasserabweisungsprozesses in einer Wandstruktur, wobei es die Schritte umfasst:
- Erzeugen von Bildern der inneren Teile der Wandstruktur durch Anwenden integrierter mikrogeophysikalischer Techniken, um die inneren Teile der Wandstruktur zu beschreiben, soweit es das Vorhandensein von Wasser oder Feuchtigkeit betrifft;
- Einführen von Emulsionen, die als entfeuchtende Substanzen verwendet werden, in die Wandstruktur durch Elektrophorese;
- Erzeugen von Bildern der inneren Teile der Wandstruktur durch Anwenden integrierter mikrogeophysikalischer Techniken, um den Weg, dem die Emulsionen folgen, den Fortschritt des Wasserabweisungsprozesses und die Effektivität der angewendeten Behandlung über die Zeit zu überwachen,
**dadurch gekennzeichnet, dass**
- die erzeugten Bilder zweidimensionale und dreidimensionale Bilder sind; und dadurch, dass
das Verfahren ferner die folgenden Schritte umfasst:
- Abführen des Wassers oder der Feuchtigkeit der Wandstruktur durch Elektroosmose; und
- Einführen der Emulsionen durch simultanes Einwirken, das durch gepulsten mechanischen Überdruck ausgeübt wird, und Elektrophorese.

2. Verfahren nach Anspruch 1, wobei die mikrogeophysikalischen Techniken durch Verwendung spezieller Hilfsmittel in Form von Instrumenten und Datenverarbeitung angewendet werden, um diese für Messungen an Wandstrukturen anzupassen, und eine oder mehrere der folgenden Verfahren umfassen: Widerstandstomographie (ERT), Eigenpotentialmethode (S.P.), GPR (Bodenanalyseradar), Seismik- (oder Schall- oder Ultraschall-) Tomographie, thermale Tomographie, multispektrale Untersuchung.

3. Verfahren nach Anspruch 1, wobei das Einführen der Emulsionen umfasst:
- Elektroosmotisches Abführen des Wassers oder der Feuchtigkeit, die in Kanälchen der Wandstruktur vorhanden ist, durch Mittel aus perforierten Metallröhren, die als negative Elektrode elektrisch verbunden sind; ähnliche Metallröhren, die in der Wandstruktur platziert sind und als Anode für die Elektroosmoseaktivierung dienen;
- gerichtete Penetration der Emulsion in die Kanälchen, die in der Wandstruktur identifiziert sind, durch Anlegen eines stationären Feldes zwischen einer oder mehreren kleinen metallischen Röhren, in die die Emulsion eingeführt wird, die mit dem positiven Pol verbunden sind, und zweiten kleinen metallische Abführröhren, die mit dem negativen Pol verbunden sind.

4. Verfahren nach Anspruch 1, wobei die Emulsionseinführung umfasst:
- erzwungenes Einführen, durch eine kombinierte Ausführung eines gepulsten Überdrucks von 50 bis 150 bar mit einer Pause, wobei der Überdruck eine Funktion von der Art des Materials, das der Wasserabweisung unterzogen werden soll, ist, und einer elektrischen Einwirkung, die durch Elektrophorese durch Anwenden eines elektrischen Feldes ausgeübt wird;
- die Emulsionen eine duale Funktion ausführen von:
a) Bewegen und Ersetzen des Wasser, das in den Kanälchen vorhanden ist;
b) Wasserdichtmachen der Kanälchen durch Kristallisation der Emulsion, wodurch auch das verbleibende Wasser eingekapselt wird.

5. Verfahren nach einem er vorhergehenden Ansprüche, wobei das Einführen der Emulsion eingerichtet ist, zukünftiges Aufsteigen von Wasser und Feuchtigkeit in die Wandstruktur zu verhindern.

6. System zum Auslösen und Kontrollieren eines Wasserabweisungsprozesses in einer Wandstruktur, umfassend Mittel zum Ausführen des Verfahrens nach einem der vorhergehenden Ansprüche, umfassend:
- Mittel zum Erzeugen von Bildern der Innenseite der Wandstruktur durch Ausüben mikrogeophysikalischer Techniken, um das Vorhandensein von Wasser oder Feuchtigkeit darin zu beschreiben;
- Mittel zum Abführen des Wassers oder der Feuchtigkeit, das in der Wandstruktur vorhanden ist, durch Elektroosmose, durch Installation von perforierten Metallröhren in die Wandstruktur, die elektrisch als Kathode verbunden sind;
- Mittel zum Einführen von Emulsionen, die als entfeuchtende Substanzen verwendet werden;
- Mittel zum Erzeugen von Bildern der inneren Teile der Wandstruktur durch Anwenden integrierter mikrogeophysikalischer Techniken, um den Weg, dem die Emulsionen folgen, und den Fortschritt des Wasserabweisungsprozesses über die Zeit zu überwachen, **dadurch gekennzeichnet, dass** das System ferner umfasst:
- Mittel zum Erzeugen zweidimensionaler und dreidimensionaler Bilder der Innenseite der Wandstruktur;
- Mittel zum Einführen der Emulsion durch simultanen gepulsten mechanischen Überdruck und Elektrophorese; und
- gleichzeitiges Platzieren perforierter Metallröhren in der Wandstruktur, die als Anode für die Elektroosmoseaktivierung dienen.

7. System nach Anspruch 6, wobei die Mittel umfassen:
- Mittel zum Verbinden der Elektroden mit der Wandstruktur, umfassend mindestens eine starre Halterung (SR), die eingerichtet ist, die Elektroden (EL) zu beherbergen, wobei jede Elektrode mit einem Signalübertragungskabel (CT) verbunden ist, ein ausdehnbares elastisches Element (EE), das mit jeder Elektrode verbunden ist und zwischen dem Anschlussteil jeder Elektrode und der starren Halterung eingefügt ist, wobei das elastische Element den Effekt von Ungleichmäßigkeiten der Wandstruktur reduziert und dadurch einen Kontakt damit sicherstellt.

8. System nach Anspruch 6, wobei die mikrogeophysikalischen Techniken durch Verwendung von Instrumenten und Datenverarbeitung angewendet werden, um diese zur Messung an Wandstrukturen anzupassen, und Mittel zum Implementieren eines oder mehreren der folgenden Methoden umfasst: Widerstandstomographie (ERT), Eigenpotentialmethode (S.P.), GPR (Bodenanalyseradar), Seismik- (oder Schall- oder Ultraschall-) Tomographie, thermale Tomographie, multispektrale Untersuchung.

## Revendications

1. Procédé d'activation et de commande d'un processus d'hydrofugation dans une structure de mur, dans lequel il comprend les étapes de :
- création d'images des parties intérieures de la structure de mur en appliquant des techniques microgéophysiques intégrées afin de caractériser les parties intérieures de ladite structure de mur en ce qui concerne la présence d'eau ou d'humidité ;
- introduction d'émulsions à utiliser en tant que substances de déshumidification, dans ladite structure de mur par électrophorèse ;
- création d'images des parties intérieures de ladite structure de mur en appliquant des techniques microgéophysiques intégrées afin de surveiller le chemin suivi par les émulsions, l'avancement du processus d'hydrofugation, et l'efficacité du traitement appliqué au cours du temps,
**caractérisé en ce que**
- les images créées sont des images bidimensionnelles et tridimensionnelles ; et **en ce que** le procédé comprend en outre les étapes suivantes :
- drainage de l'eau ou de l'humidité de ladite paroi de mur via électro-osmose ; et
- l'introduction des émulsions par l'intermédiaire d'une action simultanée exercée par surpression mécanique pulsée et par électrophorèse.

2. Procédé selon la revendication 1, dans lequel lesdites techniques microgéophysiques sont appliquées en utilisant des expédients particuliers en termes d'instruments et de traitement de données afin de les adapter pour des mesures sur des structures de mur, et comprennent un ou plusieurs des procédés suivants :
tomographie de résistivité électrique (ERT), potentiel spontané (S. P.), GPR (géoradar), tomographie sismique (ou sonique ou ultrasonique), tomographie thermique, sondage multispectral.

3. Procédé selon la revendication 1, dans lequel ladite introduction d'émulsions comprend :
- le drainage électro-osmotique de l'eau ou de l'humidité qui est présente dans les canalicules de ladite structure de mur, au moyen de tubes en métal perforés raccordés électriquement en tant qu'électrode négative ; des tubes en métal similaires étant placés dans la structure de mur, servant d'anode pour l'activation d'électro-osmose ;
- la pénétration directionnelle de l'émulsion dans les canalicules identifiés dans la structure de mur, par application d'un champ électrique stationnaire entre un ou plusieurs petits tubes métalliques, dans lesquels l'émulsion est introduite, raccordés au pôle positif, et des seconds petits tubes de drainage métalliques, raccordés au pôle négatif.

4. Procédé selon la revendication 1, dans lequel ladite introduction d'émulsions comprend :
- l'introduction forcée, via une action combinée d'une surpression pulsée de 50 à 150 bars avec une pause, ladite surpression étant fonction du type de matériau à hydrofuger, et
une action électrique exercée par électrophorèse par application de champs électriques ;
- lesdites émulsions effectuant une fonction double de :
a) déplacement et remplacement de l'eau présente dans les canalicules ;
b) étanchéification à l'eau des canalicules par cristallisation de l'émulsion, qui va également encapsuler l'eau résiduelle.

5. Procédé selon l'une quelconque des revendications précédentes, dans lequel ladite introduction d'émulsions est adaptée pour empêcher une augmentation future d'eau et d'humidité dans ladite structure de mur.

6. Système d'activation et de commande d'un processus d'hydrofugation dans une structure de mur, comprenant des moyens d'implémentation du procédé selon l'une quelconque des revendications précédentes, comprenant :
- un moyen de création d'images de l'intérieur de la structure de mur en appliquant des techniques microgéophysiques, afin de caractériser la présence d'eau ou d'humidité à l'intérieur ;
- un moyen de drainage de l'eau ou de l'humidité qui est présente dans la structure de mur par électro-osmose, par l'installation de tubes en métal perforés dans ladite structure de mur, raccordés électriquement en tant que cathode ;
- un moyen d'introduction d'émulsions, à utiliser en tant que substances de déshumidification ;
- un moyen de création d'images des parties intérieures de la structure de mur en appliquant des techniques microgéophysiques intégrées, afin de surveiller le chemin suivi par les émulsions et l'avancement du processus d'hydrofugation au cours du temps, **caractérisé en ce que** le système comprend en outre :
- un moyen de création d'images bidimensionnelles et tridimensionnelles de l'intérieur de la structure de mur ;
- un moyen pour l'introduction des émulsions par surpression mécanique pulsée et électrophorèse simultanées ; et
- des tubes en métal perforés similaires étant placés dans la structure de mur, servant d'anode pour l'activation d'électro-osmose.

7. Système selon la revendication 6, dans lequel lesdits moyens comprennent :
- un moyen de couplage des électrodes à la structure de mur, comprenant au moins un support rigide (SR) adapté pour loger les électrodes (EL), chaque électrode étant raccordée à un câble de transmission de signal (CT), un élément élastique extensible (EE) étant associé à chaque électrode, inséré entre la partie terminale de chaque électrode et le support rigide, ledit élément élastique réduisant l'effet d'irrégularités de la surface de mur, garantissant ainsi un contact avec celui-ci.

8. Système selon la revendication 6, dans lequel lesdites techniques microgéophysiques sont appliquées en utilisant des instruments et un traitement de données afin de les adapter pour des mesures sur des structures de mur, et comprennent des moyens pour implémenter un ou plusieurs des procédés suivants : tomographie de résistivité électrique (ERT), potentiel spontané (S. P.), GPR (géoradar), tomographie sismique (ou sonique ou ultrasonique), tomographie thermique, sondage multispectral.
